Europäisches Patentamt

European Patent Office

Office européen des brevets

(19)

(11) **EP 0 548 510 B1**

(12) **EUROPEAN PATENT SPECIFICATION**

(45) Date of publication and mention of the grant of the patent:
**29.12.1997 Bulletin 1997/52**

(51) Int. Cl.$^6$: **B62D 5/08**, B62D 6/02

(21) Application number: **92118728.2**

(22) Date of filing: **02.11.1992**

(54) **Hydraulic reaction variable assist power steering system**

Hydraulisches Servolenksystem mit variabler Unterstützungsreaktion

Système de direction assistée hydraulique à réaction assistante variable

(84) Designated Contracting States:
**DE ES FR GB**

(30) Priority: **23.12.1991 US 811963**

(43) Date of publication of application:
**30.06.1993 Bulletin 1993/26**

(73) Proprietors:
- **FORD MOTOR COMPANY LIMITED**
  **Brentwood, Essex CM13 3BW (GB)**
  Designated Contracting States:
  **GB**
- **FORD FRANCE S. A.**
  **92506 Rueil-Malmaison Cédex (FR)**
  Designated Contracting States:
  **FR**

- **FORD-WERKE AKTIENGESELLSCHAFT**
  **50725 Köln (DE)**
  Designated Contracting States:
  **DE**
- **FORD MOTOR COMPANY**
  **Dearborn, MI 48126 (US)**
  Designated Contracting States:
  **ES**

(72) Inventor: **Duffy, James J.**
**Livonia, Michigan 48150 (US)**

(74) Representative:
**Messulam, Alec Moses et al**
**A. Messulam & Co.**
**24 Broadway**
**Leigh-on-Sea Essex SS9 1BN (GB)**

(56) References cited:
**EP-A- 0 369 311**        **DE-A- 2 719 926**
**FR-A- 2 537 936**        **US-A- 4 434 866**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to power steering systems for automotive vehicles wherein the steering effort required for steering manoeuvres at low vehicle speeds is reduced and at high speeds is increased, thus providing an optimum steering pressure versus steering torque relationship.

The invention comprises improvements in a power steering gear of the kind disclosed in United States Patents 4,434,866, 4,586,582, 4,570,735, 4,561,521, and 4,570,736. Each of these patents is assigned to the assignee of the present invention. Each of these prior art constructions comprises a power steering system having a fluid motor with a double-acting piston which cooperates with a fluid cylinder of the motor to define two opposed working chambers. A power steering pump, driven by the vehicle engine, includes a pressure control valve and a flow control valve so that the flow delivered by the pump to the steering system remains constant regardless of varying engine speed.

The fluid circuit, of which the motor and the pump are a part, includes a rotary valve assembly having an inner valve member connected mechanically to a driver-controlled steering shaft and a rotary valve sleeve. The valve assembly comprises registering valve lands that control pressure distribution from the pump to the motor whereby the angular disposition of the dirigible wheels of the vehicle is controlled with a steering effort that is assisted by the steering pressure forces developed by the motor.

The inner and outer valve elements define registering valve lands which cooperate one with respect to the other, to define a variable area flow path between the outlet side of the pump and the flow return side. Provision is made for connecting each of the opposed working chambers of the fluid motor to the rotary valve assembly so that the pressure developed in the pressure passages connecting the pump with the motor may be distributed to each of the working chambers selectively. When one chamber is pressurised and the other exhausted, the vehicle is adapted to turn in one direction. Upon a reversal in the direction of the pressure differential in the fluid motor, the steering direction reverses.

Since the flow delivered by the pump is constant, the pressure differential developed in one working chamber is a function of the reciprocal of the square of the effective flow area across the valve lands. Thus, the relationship between pressure and valve flow area can be expressed by the equation:

$$Pressure = K(Q/CA)^2$$

where C and K are constants and A is the effective flow area. Since Q is also a constant, the pressure is functionally related only to the reciprocal of a single variable; namely, the effective flow area.

Thus,

$$Pressure = K'/CA)^2$$

where K' is a different characteristic constant that takes into account the value of flow.

Torque is transferred from the steering shaft to the driving pinion of the steering gear through a torsion bar. Upon deflection of the bar, relative angular motion of the elements of the steering valve occurs. Thus, the steering torque is determined by the torsion bar deflection as is the steering effort or steering assist provided by the fluid motor.

The relationship between torque applied to the torque input shaft and the steering pressure that is developed can be changed by a vehicle speed-sensitive valve in a parallel flow circuit from the pump through the valve system so that at low speeds the pressure is highly sensitive to changes in torque, whereas at high speeds the pressure changes are relatively insensitive to torque. These distinct functional relationships are identified in U.S. Patent 4,561,521 as a low-speed operating mode and as a high-speed operating mode, respectively.

FR-A-2537936 (corresponding to the preamble of claim 1) discloses a power steering system comprising an input shaft connected to a steering handle, a torsion bar provided for transmitting the rotation of said input shaft to an output shaft, a fluid passage changeover valve adapted to switch fluid passages in accordance with a difference in angle of rotation between said input and output shafts, a power cylinder connected to said output shaft, a high pressure fluid passage by which a hydraulic fluid delivered from an oil pump is supplied to said power cylinder through said changeover valve, a first low pressure fluid passage by which said hydraulic fluid is returned from said power cylinder to an oil reservoir through said changeover valve, a reaction piston disposed between said input and output shafts for producing a force restricting said difference in angle of rotation between said shafts, a branched fluid passage extending from said high pressure fluid passage to said piston, a pressure control valve disposed in said branched fluid passage for maintaining a hydraulic pressure at a level not exceeding a predetermined maximum pressure, a second low pressure fluid passage having one end connected by an orifice to said branched fluid passage downstream of said pressure control valve, the other end of said second low pressure fluid passage being connected to said reservoir, a pilot pressure control valve disposed in said second low pressure fluid passage for controlling a pilot pressure downstream of said orifice, and a pilot fluid passage for transmitting said pilot pressure to said pressure control valve.

The improved steering system of the present invention includes a rotary spool-type steering valve with a floating inner spool valve element, such as defined in the characterising part of claim 1. Reaction pistons are provided in the valve mechanism to establish a resistance to relative movement of the valve elements depending upon steering pressure. As the vehicle speed and the steering load increase, steering torque is increased. This increase in steering torque is determined by modulating steering pressure that acts on the reaction pistons that opposes the relative movement of the steering valve elements. Thus, instead of having two distinct operating modes as in the case of the structure of U.S Patent 4,561,521, which as mentioned earlier is identified as a low-speed mode and a high-speed mode, the system of the present invention makes it possible to shape the pressure-versus-torque relationship so that an optimum relationship can exist for all vehicle speeds and for all steering torque demands.

According to a first embodiment of the invention, the reaction pressure that acts on the reaction pistons can be determined by two hydraulic reaction pressure modulator valves and by a speed-sensitive proportional solenoid valve. The solenoid valve selects the appropriate relationship between pressure and torque for any vehicle speed, and the two pressure modulator valves establish the appropriate shape of the pressure versus torque relationship that is selected by the proportional solenoid valve. In a second embodiment of the invention, a pressure control solenoid shapes the pressure/torque boost curves by means of a programmed electronic processor using software that controls the functional relationship between the hydraulic reaction pressure and the steering pressure, thus eliminating the need for the separate hydraulic reaction pressure modulator valves.

The invention will now be described further, by way of example, with reference to the accompanying drawings, in which:

Figure 1 shows a cross-sectional view of a rotary steering valve assembly of a power steering system of the kind discussed in the preceding discussion.

Figure 2 is a view as seen from the plane of section line 2-2 of Figure 1 showing the reaction pistons that resist relative movement of the steering valve elements.

Figure 3 is a cross-sectional view taken along the plane of section line 3-3 of Figure 1 showing the inner and outer valve lands of the steering valve elements.

Figure 4 is a schematic diagram of the overall system of a second embodiment of the invention.

Figure 4A is a schematic representation of an electronic microprocessor for use in the system of Figure 4.

Figure 5 is a schematic representation of a steering valve and, in particular, the relationship between the reaction pistons and the torque input shaft for the rotary valve assembly. The reaction pistons are shown in the position they assume when the valve elements are in the on-center position.

Figure 6 is a view similar to Figure 5, although it shows reaction pistons in a right-turn mode.

Figure 7 is a graph that shows the boost curves for the invention as well as a comparison of the boost curves established with the present invention with the boost curves available with a steering system of the kind shown, for example, in U.S. Patent 4,570,736.

Figure 8 is a schematic valve diagram showing a modulator valve, a pressure limiter valve, and a pressure solenoid valve for a first embodiment of the invention.

Figure 9 is a detailed view of the pressure modulator valve of Figure 8.

Figure 9A is a graph showing the relationship between input pressure and output pressure for the pressure modulator valve of Figure 9.

Figure 9B is a graph showing the boost curves formed by the first embodiment using modulator valves and a proportional solenoid valve.

Figure 10 is a detailed view of the proportional solenoid valve of the valve diagram of Figure 8.

Figure 11 is a hydraulic reaction pressure control solenoid valve for a second embodiment of my invention.

Figure 11A is a graph that shows the pressure and torque relationships that are shaped with steering pressure and vehicle speed sensor software for the solenoid valve of the second embodiment of my invention.

Figure 11B shows the relationship between reaction pressure developed by the valve of Figure 11 and amperage for the solenoid valve of Figure 11.

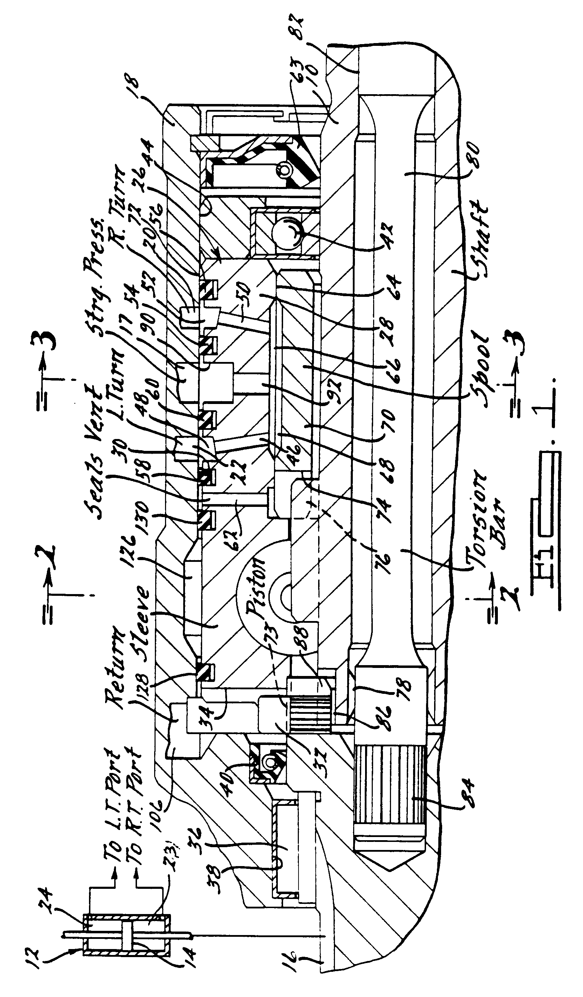

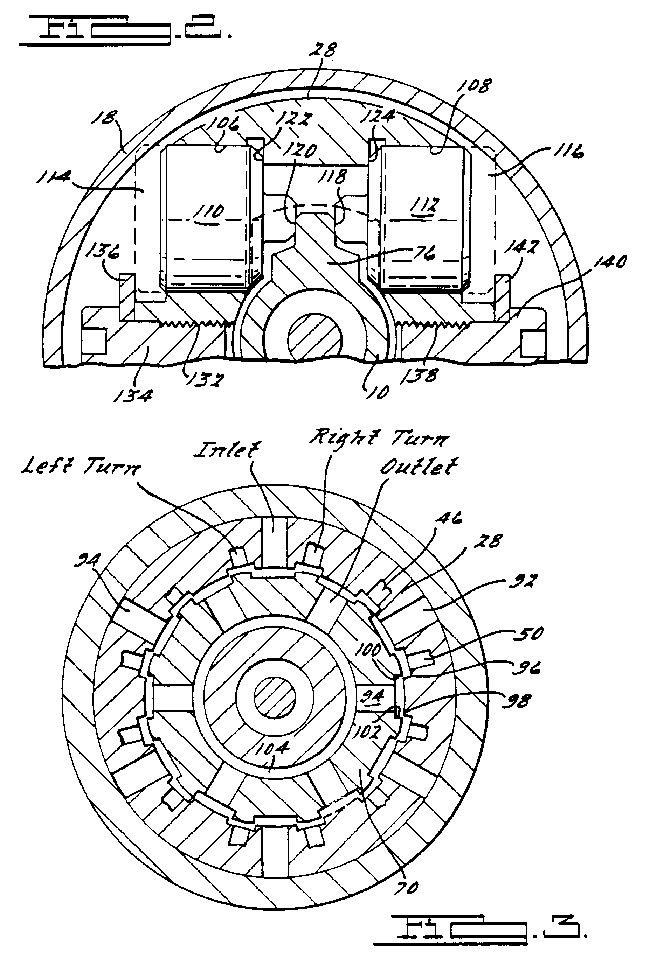

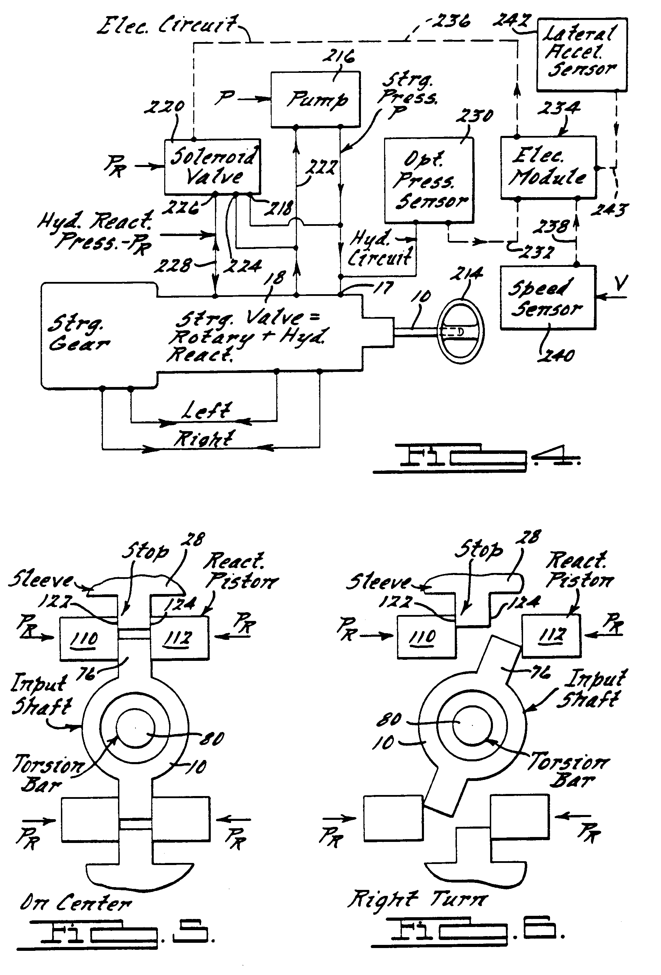

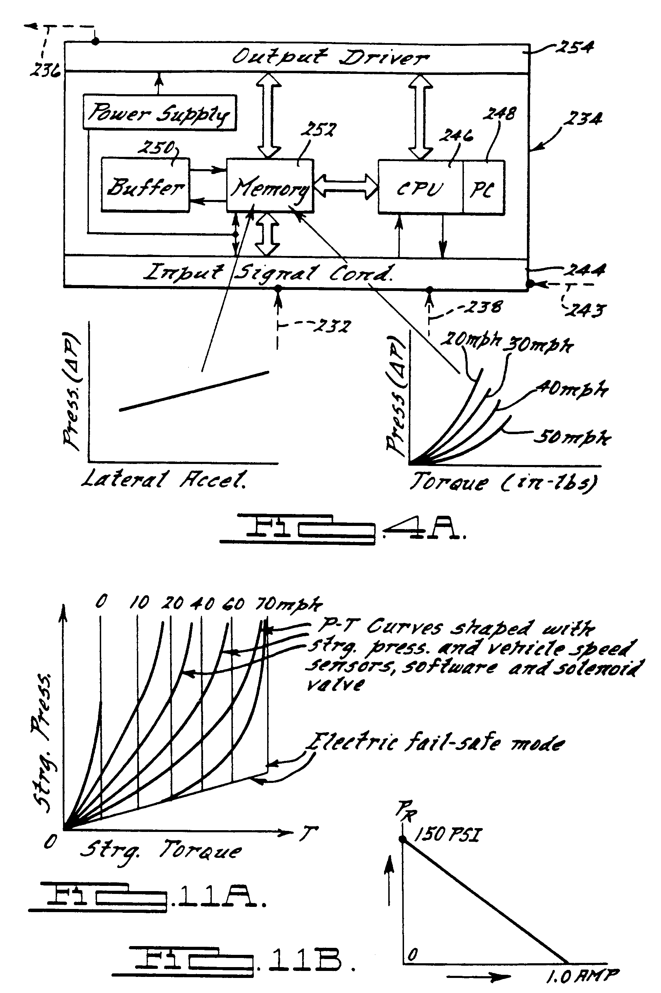

Numeral 10 in Figure 1 designates a driver-controlled steering shaft for a motor vehicle. Numeral 12 generally designates, in schematic form, a fluid motor having a pressure-actuated piston 14 connected to the vehicle traction wheels through a suitable steering linkage (not shown) and to a pinion 16, which is adapted to be connected by means of a rack-and-pinion assembly to the piston 14. Steering pressure of the power steering pump is adapted to deliver working pressure to steering pressure input port 17. The pump and the associated fluid circuit will be described more fully with reference to Figure 4.

The steering gear includes a cylindrical housing 18 in which the port 17 is formed. A right-turn port 20 and a left-turn port 22 also are formed in the housing 18. These are connected, respectively, to pressure chambers 23 and 24 for the fluid motor 12.

Figure 1 shows a valve assembly identified generally by reference numeral 26. This valve assembly comprises a valve sleeve 28 situated in a valve cylinder 30. A drive pin 32 formed in the pinion 16 extends radially with respect to the axis of the sleeve 28 and engages an end groove 34 in one end of the sleeve 28. Thus, during steering manoeuvres, the sleeve 28 moves with the pinion 16 within the steering valve cylinder 30.

The pinion 16 is journalled by a bearing 36 in bearing opening 38 formed in the housing 18. A fluid seal 40 seals the pinion and the housing opening through which the pinion extends.

Steering shaft 10 is journalled by bearing 42 on the right-hand side of the sleeve 28 as shown in Figure 1. Bearing 42 provides a bearing support as it is carried by the cylinder 30 of the housing 18 as shown at 44.

Left-turn passage 46 in the sleeve 28 communicates with annular groove 48, which in turn communicates with left-turn passage 22. Similarly, right-turn port 50 communicates with an annular groove 52 in sleeve 28. Groove 52 in turn communicates with right-turn port 20. Seal rings are disposed in seal ring grooves situated on either side of the groove 52 as shown at 54 and 56. Similarly, seal ring grooves receive seal rings on either side of the left-turn port 22, as shown at 58 and 60. A vent port 62 in the sleeve 28 communicates with a vent port 106 in the housing 18. This provides a venting of the interior of the valve cylinder 30 between the seal 40 and a corresponding lip seal 63.

The valve sleeve 28 has a central opening 64 in which is formed internal valve lands 66. These register with external valve lands 68 formed on a valve spool 70, the latter being piloted at each of its axial ends in the opening 64.

Valve sleeve 28 is rotatably guided in the housing 18 as pilot surface 72 registers with the opening 44. The other end of the sleeve 28 is rotatably guided at 73, as seen at the left-hand side of the sleeve 28 shown in Figure 1.

The spool 70 is provided with an angularly spaced slot 74 which registers with a radial projections 76 formed on the torque input shaft 10, the latter being rotatably guided by bearing element 78 on the left-hand of the torsion bar 80.

Torque input shaft 10 is drivably connected to the torsion bar 80 at 82. The left-hand end of the torsion bar 80 is splined as shown at 84 to an internally splined opening in the end of the pinion 16.

The left end of the torque input shaft 10 is provided with dog coupling teeth in the form of angularly spaced slots 86 which register with corresponding internal coupling teeth 88 in the right end of the pinion 16, thus forming a lost motion connection between the shaft 10 and the pinion 16. The degree of relative motion established by the dog coupling will permit the torsion bar to transmit torque from the input shaft 10 to the pinion 16 up to a limit. When that limit is reached, torque is transferred directly from the shaft 10 to the pinion 16 through the dog coupling.

Any misalignment of the sleeve 28 with respect to the axis of the pinion 16 can be accommodated by reason of the articulation that is permitted by the end bearing supports at the right end of the sleeve as shown at 72 and the left end of the sleeve as shown at 73. Regardless of the angular disposition of the axis of the sleeve 28 with respect to the axis of the pinion 16, the spool 70 will precisely register with the sleeve 28 because of the articulated connection between the spool 70 and the input shaft 10 provided by the slot 74 and the projection 76. The spool thus can be considered to be a floating valve spool which always registers precisely with the internal valve lands of the sleeve 28 regardless of any slight misalignment of the sleeve with respect to the pinion 16.

As seen in Figure 1, pressure input port 17 communicates with a groove 90 in the sleeve 28. This, in turn, communicates with radial ports 92. Valve spool 70 is provided with radial ports 94, as seen in Figure 3, which are situated between internal valve lands 96 and 98 formed in the valve sleeve. External valve lands 100 and 102 formed in the spool 70 register, respectively, with internal lands 96 and 98, thus forming a flow passage on either side of the radial ports 94.

The radially inward ends of the ports 94 communicate with annular space 104 which is a flow return passage that communicates with return flow passage 106 seen in Figure 1.

When the valve spool is centred with respect to the sleeve, the flow area established by the registering valve lands for the right-turn port 50 is substantially the same as the flow area for the left-turn port 46. Thus, the pressure differential across the steering motor piston 14 is zero and the pressure forces are balanced. Fluid flow delivered through the passage 92 is distributed in this case across the valve lands and through the radial ports 94 to the flow return passage.

If steering torque is applied in a right-turn direction to the torsion bar, the valve spool will shift slightly in a clockwise direction relative to the valve sleeve seen in Figure 3, thereby enlarging the flow area between passage 92 and port 50 and simultaneously decreasing the flow area between passage 92 and the port 46 leading to the right-turn side of the fluid motor. This provides a steering assist which complements the steering torque applied to the pinion through the torsion bar.

If torque is delivered to the pinion 16 through the torsion bar 80 in the opposite direction, the flow area for the left-turn port is increased, and the flow area for the right-turn port is decreased, thus providing for a steering assist in the opposite direction.

It should be noted in Figure 3 that in a left turn as the external land controlling the flow to the passage 50 increases the degree of communication between passage 92 and port 46, and the corresponding degree of communication between port 50 and radial passage 94 is decreased. The converse is true when the direction of the steering torque is reversed. This change in flow area results in a pressure differential in accordance with the pressure function described in the description of the "Background of the Invention" set forth above.

There is provided a means for resisting the angular motion of the spool relative to the sleeve, and means for varying the amount of that resistance depending upon the speed of the vehicle. This is achieved by the hydraulic reaction pistons shown in Figure 2.

As seen in Figure 2, the sleeve is provided with a pair of opposed reaction pressure cylinders 106 and 108. A reaction piston 110 is slidably disposed in cylinder 106, and a corresponding piston 112 is slidably disposed in reaction cylinder 108. Piston 110 and cylinder 106 define a reaction pressure chamber 114 which communicates with a reaction pressure port (not shown) formed in the housing 18. Similarly, piston 112 and cylinder 108 define a reaction pressure chamber 116 which communicates with the same reaction pressure port formed in the housing 18.

Projection 76 on the steering shaft 10 includes a reaction surface 118 which is engaged by the piston 112 and a reaction surface 120 which is engaged by the piston 110. When the working chamber 116 is pressurised, a reaction pressure force developed on the piston 112 causes a counterclockwise torque to be applied to the shaft 10. Similarly, if the pressure chamber 114 is pressurised, piston 110 will apply a clockwise torque to the shaft 10 as viewed in Figure 2.

When the shaft 10 is centred with respect to the sleeve, piston 110 engages a stop shoulder 122 formed in the sleeve 28, and piston 112 engages a stop shoulder 124 also formed in the sleeve 28. During straight-ahead driving, when the steering pressures on either side of the piston 14 of the fluid motor are balanced, the reaction pressures in chambers 114 and 116 are balanced and the pistons 110 and 112 assume the position shown in Figure 2.

If the spool is displaced relative to the sleeve, one of the pistons 110 or 112 is displaced from its stop 106 or 124 and the pressure in the reaction pressure chamber 114 and 116 resists relative angular displacement of the shaft with respect to the sleeve.

It is apparent from the foregoing description that the magnitude of steering torque that is achieved is dependent in part upon the pressure established in the chambers 114 and 116. I have made provision for controlling that pressure differential so that the relationship between steering torque and steering pressure can be modified or tailored to suit any particular driving condition. For example, at high speeds, the resistance to relative angular displacement of the steering shaft relative to the sleeve is increased.

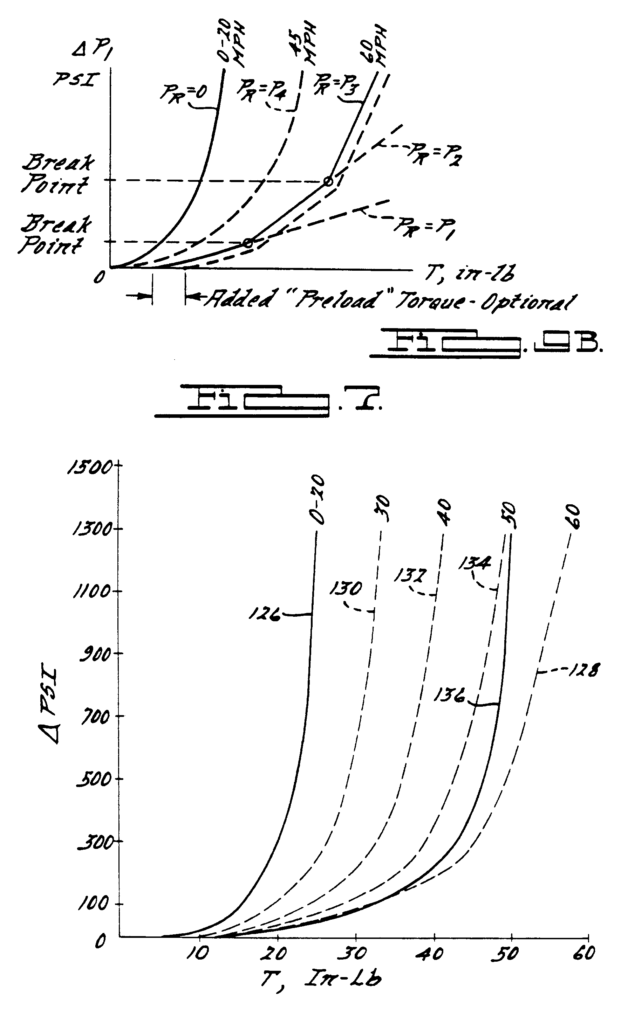

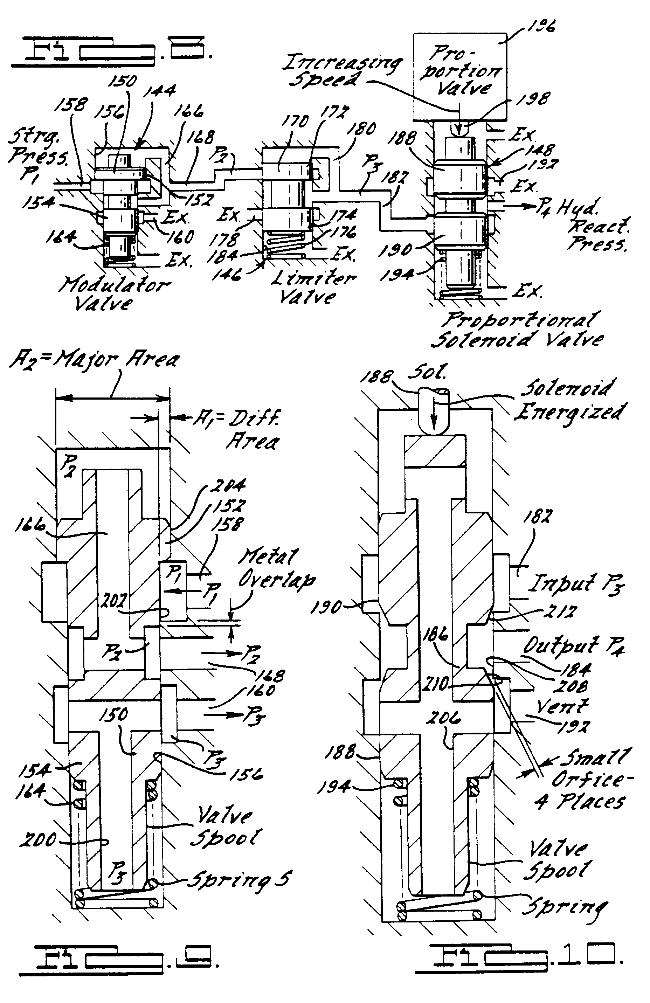

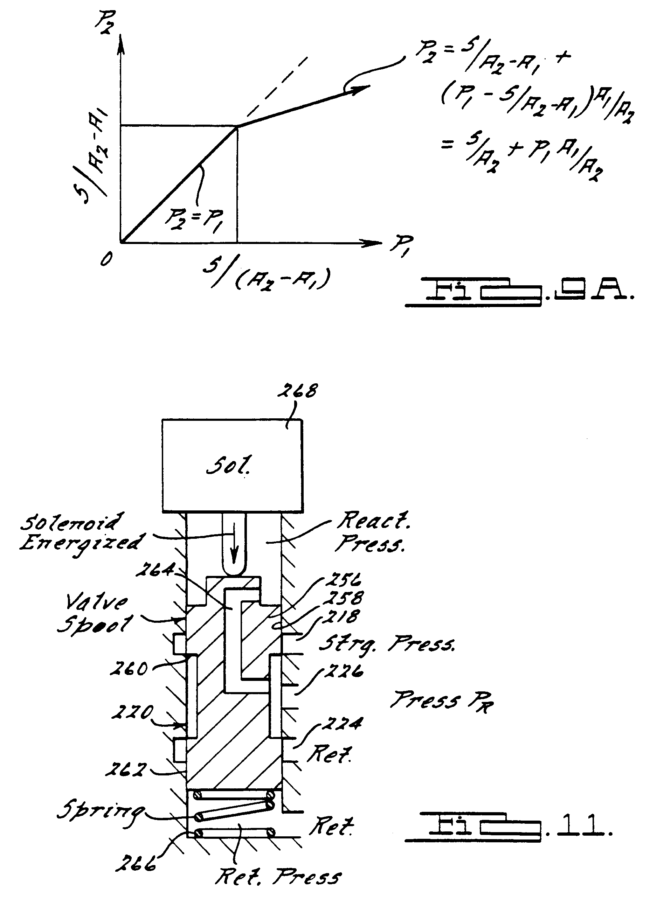

In Figure 7, I have illustrated a graph that shows the relationship between steering torque and the pressure differential developed in the steering motor. At low vehicle speeds when the vehicle is travelling, for example, at speeds between zero and 20 mph, in the piston chambers 114-116 pressure is small and the functional relationship between torque and pressure differential is shown by curve 126. On the other hand, if the vehicle is travelling at a speed of 60 mph, the corresponding relationship between torque and pressure differential across a steering motor is shown by curve 128. At speeds between the two extreme values represented by curves 126 and 128, varying degrees of steering torque can be achieved. If the vehicle speed should be 30 mph, for example, a partial pressure buildup will occur in one of the reaction cylinders so that the curve is modified as shown at 130. Further increases in speed will result in a further shifting of the characteristic curve to the right, as seen in Figure 7. The characteristic curve for a vehicle travelling at 40 mph is shown at 132, and the corresponding 50 mph curve is shown at 134.

In a typical variable assist power steering mechanism of the kind shown in U.S. Patent 4,570,735, referred to previously, the characteristic curves for low-vehicle speeds might correspond to curve 126. At high vehicle speeds, the characteristic curve representing the torque and pressure differential relationship will correspond to the curve 136 in Figure 7. It is seen, therefore, that by properly tailoring the pressure in the reaction pressure cylinders of my present invention it is possible to tailor the characteristic curves so that any of one of a family of curves between the maximum and minimum values can be achieved as the vehicle speed changes. Other vehicle characteristics, measured by other operating variables such as engine throttle position, vehicle lateral acceleration and road surface slope can be used to modify the relationship of torque to steering pressure differential. This control of the reaction pressure is achieved electronically as will be described with reference to Figures 4, 8, 9, 10 and 11.

The pressure chambers 114 and 116 communicate with an annular space 126 as seen in Figure 1, which surrounds the sleeve. Space 126 is sealed from the adjacent fluid passages by a pair of axially spaced seal rings 128 and 130.

The sleeve 28, as seen in Figure 2, is provided with a threaded opening 132 which receives a bolt 134 which retains a stop washer 136 located in the path of movement of piston 110. Thus, the stop washer 136 limits the left-hand movement of the piston 110 as viewed in Figure 2. Similarly, a threaded opening 138 is formed in the opposite side of the opening 132. This opening receives a bolt 140 which retains another stop washer 142 which limits the movement of the piston 112 in a right-hand direction.

Shown in Figure 8 is a hydraulic reaction pressure control system that comprises three main elements; namely, a modulator valve 144, a pressure limiter valve 146 and a proportional solenoid valve 148. Modulator valve 144 comprises a valve spool 150 having spaced valve lands 152 and 154, which respectively register with valve ports formed in valve chamber 156 which communicate with a steering pressure inlet port 158 and a return port 160. Feedback pressure passage 166 distributes steering pressure to the upper side of land 152 to provide a pressure force that opposes the force of valve spring 164. Similarly, feedback passage 158 communicates with the lower side of land 152 to establish a pressure force that assists the force of spring 164. A pressure will be developed by the modulator valve in outlet passage 168 that is functionally related to steering pressure in passage 158 and to the calibration of the valve lands and the valve spring.

The output pressure in passage 168 is delivered to the pressure limiter valve 146, which comprises valve spool 170 having spaced lands 172 and 174 and a valve spring 176. Return port 178 registers with land 174, and a pressure inlet port which forms a part of passage 168 registers with land 172. Feedback pressure passage 180 extends from the output side of the pressure limiter valve to the upper end of the land 172. Valve 146 thus establishes a limiting pressure in outlet passage 182, which communicates with valve chamber 182A intermediate the lands 172 and 174.

The hydraulic reaction pressure that is distributed to pressure chambers 114 and 116 behind the pistons 110 and 112 is developed by the proportional solenoid valve 148. Output pressure port for the hydraulic reaction pressure shown at 184 communicates with annular space 126 surrounding the valve sleeve 128 through a port (not shown) in the housing 18 seen in Figure 1.

The proportional solenoid valve comprises a valve spool 186 having spaced lands 188 and 190 situated on opposite sides of the hydraulic reaction pressure outlet port 184. Land 190 registers with port 192 that communicates with the limiter valve outlet pressure passage 182 and land 188 registers with a return port. Valve spring 194 urges the valve element 186 in an upward direction, thereby tending to open the return port and reducing the pressure in hydraulic reaction pressure port 184. Spring 194 also tends to open communication between outlet port 184 and the pressure limiter pressure passage 182.

A solenoid that is proportional to vehicle speed is identified generally by reference numeral 196. It includes a solenoid winding surrounding a solenoid armature 198 which engages valve spool 186 and establishes a solenoid force on the valve spool 186 that opposes the force of the spring 194. Decreases in vehicle speed will increase the force that opposes the force of the spring 194.

Thus, the series related valves regulate and then reregulate the steering pressure in passage 158 to produce a hydraulic reaction pressure in passage 184. The degree to which the steering pressure is modified depends upon the calibration of the valves and the valve spring so that the so-called shape of the boost curve representing steering pressure versus steering torque versus vehicle speed is the optimum operating condition.

The characteristic curve for the pressure boost function may be as shown in Figure 7 where the pressure differential across the steering motor is shown plotted against steering torque for various vehicle speeds. At low vehicle speed, the pressure curve rises quickly as the torque increases. The curves progressively become flatter and have a lower slope as the vehicle speed increases.

Figure 9 shows a preferred embodiment of the modulator valve illustrated schematically in Figure 8. As seen in Figure 9, feedback passage 166 is situated at the center of the valve spool 150 and communicates with outlet port 168. Return port 160 communicates with central opening 200 in the valve spool 154, which communicates with the lower-hand end of the valve chamber 156 that is occupied by spring 164.

The symbols $P_1$, P and $P_3$ in Figure 9 represent the input pressure, the output pressure and the return pressure, respectively. As seen in Figure 9, valve land 152 is formed with a double diameter, the smaller diameter portion 202 registering with inlet pressure port 158. A small degree of overlap at the metering edges of the valve land surfaces is provided as indicated by the label in Figure 9. The calibration of the pressure modulator valve in Figure 9 can be tailored by appropriately varying the diameter of the large diameter portion 204 of the land 152 relative to the diameter of land 154 and by appropriately varying the spring rate of spring 164.

As in the case of the valve lands that control communication between ports 158 and 168, valve land 154 is provided with a small metal overlap as indicated by the label in Figure 9 at the location where the land 154 registers with the internal land for outlet port 168.

Figure 9A shows a typical characteristic curve for the relationship between control pressure $P_2$ and the inlet pressure $P_1$. At pressures at the inlet port 158 that are insufficient to cause deflection of the preloaded spring 164, pressure $P_1$ will equal pressure $P_2$ as indicated by the plot of Figure 9A. When the pressure force at the upper side of the land 152 increases sufficiently to cause the spring to deflect, the slope of the pressure line shown in Figure 9A is modified so that it has a lesser slope. Thus, greater changes in the value of $P_1$ are required to effect a given change in the value of $P_2$. The relationship between the spring force, the areas and the pressures are indicated by the formula for $P_2$ set forth in Figure 9A.

Figure 9B shows how the modulator valve shapes the high-speed pressure-torque boost curve having essentially linear slopes which increase to new chosen values at chosen break-point steering pressures. Optionally, a second modulator valve can replace the limiter valve.

A preferred embodiment of the proportional solenoid valve of Figure 8 is indicated in Figure 10. As seen in Figure 10, the return port communicates through a central passage 206 with each of the ends of the valve spool 186. The output port 184, which carries a reaction pressure outlet pressure $P_4$, communicates with the valve chamber 208 at a location between the lands 188 and 190. Land 188 registers with return passage 192 through a tapered metering edge 210 formed on the land 188. Similarly, a metering edge 212 formed on the land 190 provides controlled communication between reaction pressure outlet port 184 and inlet port 192. Thus, the shape of the characteristic curves representing the relationship between reaction pressure and input pressure $P_3$ can be modified by calibrating the flow restriction established by the tapered edges of the valve lands as shown at 210 and 212.

If desired, the valve land tapered edges can be provided with a series of grooves defining small orifices, as indicated by the legend shown in Figure 10. For any given change in the solenoid force established by the armature 198, the resulting variation in the output pressure $P_4$ can be modified, thus avoiding abrupt changes in output pressure for a given change in the solenoid force.

When the solenoid is fully energised, pressure $P_R$ equals return pressure. When the solenoid is de-energized, valve spool 186 is shifted up so that pressure $P_R$ equals pressure $P_3$. When the solenoid is partially energized, the outlet pressure $P_R$ is equal to the inlet pressure $P_3$ times a constant that depends upon the calibration of the spring 194.

By referring to Figure 10, it will be seen that when the solenoid is energized, the reaction pressure $P_R = 0$. When the solenoid is partially energized, $P_R = K$ times $P_3$, where K is a constant that depends upon the relative values at the chamfers that form the small orifices indicated in Figure 10. If the solenoid is not energized, $P_R = P_3$.

In a second embodiment of the invention, as shown in Figure 4 in schematic form, an electronically controlled steering system for developing a reaction pressure for the reaction pistons includes an electronic microprocessor. The magnitude of the reaction pressure is dependent upon the output signal developed by the microprocessor and the resulting solenoid driver signal for the solenoid valve. The system senses the output load, which is the steering pressure differential at the steering motor, and the vehicle speed to control the steering effort in accordance with the calibration of the electronic module for the microprocessor and the software program by means of which the electronic control unit of the microprocessor responds to the vehicle operating parameters.

In addition to vehicle speed, the software may cause instructions to be issued to the electronic control unit to develop a modification for the reaction pressure depending upon lateral acceleration, for example, or possibly other vehicle variables such as steering wheel angle, road grade and slope or engine throttle position in addition to the lateral acceleration of the vehicle. Such lateral acceleration becomes of importance during turning manoeuvres of the vehicle and when the vehicle is subjected to transverse forces such as wind gusts as the vehicle is travelling in a straight-ahead direction. Such lateral acceleration forces may occur also when the vehicle is operated on a road surface with a changing crown or a changing lateral slope.

The electronic microprocessor makes it possible, therefore, for the steering system to control the steering effort by increasing the hydraulic reaction forces developed by the reaction pistons rather than by controlling the effort due to changes in the torsion bar twist as in the case of the steering systems shown in prior art patents of the type previously described such as U.S. Patents 4,570,735 and 4,570,736. It is possible also to achieve that degree of control while reducing to a minimum the angular displacement of the inner valve member relative to the internal lands formed on the valve sleeve. Thus, valve friction is reduced and the hydraulic circuit for the valve elements is substantially simplified.

In Figure 4, steering torque is applied to the torsion bar from steering wheel 214 and the torque input shaft 10 at power steering pump 216. Steering pressure is developed by the pump 216 and is delivered to inlet port 218 of the solenoid valve 220. Valve 220 is illustrated in schematic form in more detail in Figure 11.

A flow return passage 222 returns the steering fluid to the pump from exhaust port 224 in the solenoid valve. Hydraulic reaction pressure is distributed from port 226 in the solenoid valve 220 through passage 228 which communicates with the pressure chambers of the reaction pistons and with the space 126 shown in Figure 1.

The magnitude of the steering pressure is sensed by a pressure sensor 230 which may be any of a number of well known pressure sensors capable of developing a pressure signal that is proportional to the input pressure in port 17 of the steering gear. This achieves a closed-loop control circuit wherein the processor may adjust reaction pressure in accordance with pressure changes detected by the sensor 230. The sensor 230 acts as a pressure-to-voltage transducer and distributes a signal voltage through line 232 to a microprocessor 234. Microprocessor 234 develops a signal in line 236, which is distributed to the solenoid valve 220, as indicated in the schematic diagram of Figure 4.

In addition to the electrical signal provided for the microprocessor 234 through line 232, the input signal conditioning circuit for the microprocessor 234 receives a vehicle speed signal through line 238 from speed sensor 240. If desired, other input signals can be distributed to the microprocessor 234 such as the signal developed by a lateral acceleration sensor 242, the signal input being shown at 243.

In Figure 4A, the microprocessor 234 includes an input signal conditioning circuit 244 which receives the input signals such as the speed sensor signal and the lateral acceleration sensor signal. The microprocessor 234 further includes a central processor unit or "CPU" 246 which is under the control of a program counter 248. In known fashion, the CPU will fetch a signal from the input signal conditioning portion 244 and transfer it to a buffer storage area such as the buffer 250. It then addresses the memory portion 252 to obtain data stored in memory for comparison to the input signal value stored in the buffer. The result of that comparison is a computation that results in the transfer of an output signal to the output driver portion of the processor as shown in 254. The data that is stored in memory is the optimum functional relationship between steering pressure and torque, as indicated schematically in Figure 4. Various values for steering torque for each value of steering pressure is stored in memory and for each of the family of vehicle speeds. That data represents the optimum steering torque for the particular driving conditions that are sensed by the sensors, including the sensor 240 and the sensor 242.

The lateral acceleration sensor 242 develops a signal that is delivered also to the input signal conditioning portion 244 where it is fetched and compared to a memory value such as that illustrated schematically in Figure 4. The schematic illustration in Figure 4 shows a plot in the relationship between steering pressure and lateral acceleration.

The value of steering torque can be modified by the microprocessor 234 without a corresponding deflection of the torsion rod in order to accommodate varying operating conditions as measured by the various sensors such as the speed sensor 240 and the lateral acceleration sensor 242.

Figure 5 shows in schematic form the relationship between the input shaft and the reaction pistons 110 and 112 when the steering gear is in the so-called on-center position. At that time, the pistons 110 and 112 engage their respective stops 122 and 124. Figure 6 shows the same elements indicated in Figure 5, but the input shaft has been turned upon application of torque to the steering wheel so that piston 124 is displaced as is the corresponding piston on the opposite side of the input shaft axis. The pressure force acting on the piston 112 by the reaction pressure opposes the relative displacement of the shaft 10 relative to the sleeve 28.

It should be noted that a "preload" reaction pressure will prevent any valve motion until it is overcome by a "preload" steering torque (see Figure 9B). The desired values may be selected by adjusting the pressure drop across the rotary valve.

Figure 11 shows in schematic form in more detail the solenoid valve 220 illustrated schematically in the system of Figure 4. Steering pressure is delivered to the steering valve 220 through steering pressure passage 218. The solenoid valve comprises a valve spool 256 slidable disposed in valve chamber 258. Valve land 260 formed on the valve spool 258 registers with steering pressure port 218. Reaction pressure is distributed to the chamber 258 at a location between land 260 and a second land 262, the latter registering with fluid return port 224.

Reaction pressure is distributed to the upper side of the land 260 through an internal passage 264. This creates a pressure force on the valve spool 256 which is opposed by valve spring 266. Return pressure acts on the lower side of the land 262. When the vehicle speed is high, the speed signal delivered to solenoid 268 is zero. When the vehicle speed is zero, the signal delivered to the solenoid 268 is a maximum. In a preferred embodiment, the maximum value is one ampere.

Thus, when the vehicle speed is high, the degree of communication between the reaction pressure passage 226 and the steering pressure passage 218 is increased and the communication between passage 226 and passage 224 is decreased. This results in a higher reaction pressure in passage 226. The converse is true when the vehicle speed decreases.

Figure 11A shows the relationship between steering torque and steering pressure when the pressure torque curves are shaped using steering pressure and vehicle speed as variables. Thus, the steering torque will vary until a desired torque is achieved at a given vehicle steering pressure and speed. When the steering torque is determined by the additional variable made available by the pressure sensor, the curves are shaped so that the steering torque varies uniformly along a generally parabolic line for various vehicle speeds, thereby providing improved road feel. The steering sensation is determined by the actual vehicle steering requirements under a variety of steering conditions rather than the steering requirements determined only by vehicle speed.

Figure 11B shows the relationship between amperage for the solenoid and the reaction pressure. It should be noted that the relationship is generally linear and that it has a negative slope so that the maximum amperage corresponds to a minimum reaction pressure.

**Claims**

1. A fluid pressure operated power steering gear mechanism comprising:

a fluid pressure source (12), a steering pressure movable part (14) adapted to be connected to a steering linkage for a vehicle, a drive member (16) connected to said pressure movable part, a driving shaft (10) connected to said drive member:
a valve housing (18) a rotary steering valve means (26) situated in said housing and partly defining pressure distribution and flow return passages extending between said pressure source (12) and said pressure movable part (14) for establishing steering pressure and steering pressure differential forces on said pressure movable part;
said valve means (26) comprising an internal valve member (70) and a surrounding sleeve valve member (28), said internal valve member and said sleeve valve member having registering valve lands (66,68,96,98,100,102), one of said valve members being connected to said driving shaft and the other being drivably connected to said drive member whereby relative rotary displacement of said valve members (28,70) effects a change in the flow area through said valve means and a corresponding pressure differential change acting on said pressure movable part;

at least two pressure reaction pistons (110,112) in said sleeve valve member (28), passage structure in said valve means (26) for distributing reaction pressure for said pressure movable part to said reaction pistons thereby establishing opposed steering torque reaction forces;

means (114,116) for applying said reaction forces to one of said valve members (28,70) whereby relative angular displacement of said valve members is resisted;

sensor means (230,240,242) for developing a signal that is functionally related to at least one vehicle operating variable; and

reaction pressure control valve means (144,146,148) communicating with said steering valve means (26) and said sensor means for modifying said steering pressure to establish a value for said reaction pressure that is functionally related to said one vehicle operating variable whereby a variable steering torque is achieved as a function of reaction pressure independently of the degree of relative angular displacement of said valve members and characterised by said sleeve member (28) rotatably guided in said housing (18) at one axial end of said sleeve valve member and at the other axial end thereof;

said internal valve member (70) comprising a spool rotatably guided within said sleeve member (28); and

an articulated driving connection between said spool (70) and said driving shaft whereby said spool is disposed in said sleeve valve member (28) with a floating action and registers with said valve lands for said sleeve valve member independent of any misalignment between said sleeve valve member (28) and said drive member (16).

2. A mechanism as claimed in Claim 1, wherein said reaction pressure control valve means comprises a solenoid valve means (148) communicating with said pressure movable part and said pressure reaction pistons whereby said solenoid valve means is subjected to said steering pressure;

an electronic controller (234) connected to said solenoid valve means and said sensor means (230,240,242) whereby said solenoid valve responds to a control signal established by said controller that is related in magnitude to the magnitude of said operating variable.

3. A mechanism as claimed in Claim 2, wherein said controller (234) includes a memory portion (252) that contains steering torque, steering pressure and vehicle speed data for optimum steering characteristics for various speeds, a pressure sensor means (230) for detecting steering pressure and for delivering to said controller a steering pressure signal, and a vehicle speed sensor means (240) for delivering to said controller a vehicle speed signal.

4. A mechanism as claimed in Claim 2, wherein said controller (234) includes a memory portion (252) that contains torque and steering pressure data for various vehicle speeds, a pressure sensor means (230) for detecting steering pressure and a vehicle speed sensor means (240) for delivering to said controller a steering pressure signal and vehicle speed signal.

**Patentansprüche**

1. Durch Hydraulikdruck betätigte Servolenkanlage, folgendes aufweisend:

eine Hydraulikdruckquelle (12), ein über den Lenkdruck verstellbares Teil (14), das dazu ausgelegt ist, mit einem Lenkgestänge für ein Fahrzeug verbunden zu werden, einem Antriebsglied (16), das mit besagtem druckbetätigtem verstellbarem Teil verbunden ist, einer mit besagtem Antriebsglied verbundene Antriebswelle (10);

ein Ventilgehäuse (18), eine Drehschieberventilvorrichtung (26), welche in besagtem Gehäuse angeordnet ist und teilweise Druckverteiler- und Rücklaufkanäle bildet, die sich zwischen besagter Druckquelle (12) und besagtem beweglichem Teil (14) erstrecken, zur Erzeugung von Lenkdruckkräften und Lenkdruckdifferenzkräften, die auf das druckbetätigte bewegliche Teil einwirken;

wobei besagte Ventilvorrichtung (26) ein inneres Ventilglied (70) und ein dieses umgebendes Ventilbüchsenglied (28) aufweist, wobei gesagtes inneres Ventilglied und besagtes Ventilbüchsenglied paßgenau ineinander gefügte Ventilstege (66, 68, 96, 98, 100, 102) aufweisen, wobei eines der besagten Ventilglieder mit besagter Antriebswelle verbunden ist, und das andere kraftschlüssig mit besagtem Antriebsglied verbunden ist, so daß eine relative Drehbewegung der besagten Ventilglieder (28, 70) zueinander eine Änderung des Strömungsquerschnittes durch besagte Ventilvorrichtung bewirkt, sowie eine entsprechende Änderung des auf eine Seite des besagten druckbetätigten verschiebbaren Teils einwirkenden Differenzdruckes;

wenigstens zwei Gegenhaltekolben (110, 112) in besagtem Ventilbüchsenglied (28), eine Kanalstruktur in besagter Ventilvorrichtung (26) zur Verteilung des Gegendruckes für besagtes druckbetätigtes bewegliches Teil an besagte Gegenhaltekolben, so daß entgegengesetzte Lenkmoment-Gegenkräfte erzeugt werden;

Mittel (114, 116) zum Anlegen besagter Gegenkräfte an eines der besagten Ventilglieder (28, 70), so daß einer Relativdrehbewegung der besagten Ventilglieder zueinander Widerstand entgegengesetzt wird;

Gebermittel (230, 240, 242) zur Erzeugung eines Signals, das funktionell mit wenigstens einer Fahrzeugbetriebsvariablen gekoppelt ist; und

Gegendruck-Steuerventilmittel (144, 146, 148), welche mit besagter Lenkventilvorrichtung (26) und besagten Gebermitteln in Verbindung stehen, zwecks Änderung des besagten Lenkdruckes, so daß ein Wert für besagten Gegendruck hergestellt wird, der funktionell mit besagter einer Fahrzeugbetriebsvariablen verknüpft ist, so daß ein in Abhängigkeit vom Gegendruck variierbares Lenkmoment erzielt wird, unabhängig von der relativen Winkelverschiebung der besagten Ventilglieder zueinander, und

gekennzeichnet durch besagtes Büchsenglied (28), das am einen axialen Ende des besagten Ventilbüchsengliedes und am anderen axialen Ende desselben drehbar in besagtem Gehäuse (18) gelagert ist;

wobei besagtes inneres Ventilglied (70) einen drehbar in besagtem Büchsenglied (28) gelagerten Schieber aufweist; und durch

eine gelenkige Antriebsverbindung zwischen besagtem Schieber (70) und besagter Antriebswelle, so daß besagter Schieber in besagtem Ventilbüchsenteil (28) schwimmend gelagert ist und sich paßgenau in die besagten Ventilstege des besagten Ventilbüchsengliedes einfügt, ungeachtet jeder Achsabweichung zwischen besagtem Ventilbüchsenglied (28) und besagtem Antriebsglied (16).

2. Anlage nach Anspruch 1, in welcher besagte Gegendruck-Steuerventilmittel eine Elektromagnetventilvorrichtung (148) aufweisen, welche mit besagtem druckbetätigtem beweglichem Teil und besagten Gegendruckkolben in Verbindung steht, so daß besagte Ventilvorrichtung dem besagten Lenkdruck ausgesetzt ist; und

eine mit besagter Elektromagnetventilvorrichtung und besagten Sensormitteln (230, 240, 242) gekoppelte elektronische Steuerung (234), so daß besagtes Elektromagnetventil auf ein von besagter Steuerung erzeugtes Steuersignal anspricht, das in seiner Größe der Größe der besagten Betriebsvariablen zugeordnet ist.

3. Anlage nach Anspruch 2, in welcher besagte Steuerung (234) einen Speicherteil (252) beinhaltet, der Lenkmoment-, Lenkdruck- und Fahrzeuggeschwindigkeitsdaten für optimales Lenkverhalten bei verschiedenen Geschwindigkeiten enthält, Druckgebermittel (230) zur Erfassung des Lenkdruckes und zur Abgabe eines Lenkdrucksignals an besagte Steuerung, und Fahrzeuggeschwindigkeits-Gebermittel (240) zur Abgabe eines Fahrzeuggeschwindigkeitssignals an besagte Steuerung.

4. Anlage nach Anspruch 2, in welcher besagte Steuerung (234) einen Speicherteil (252) beinhaltet, der Drehmoment- und Lenkdruckdaten für verschiedene Fahrzeuggeschwindigkeiten enthält, Druckgebermittel (230) zur Erfassung des Lenkdruckes, und Fahrzeuggeschwindigkeits-Gebermittel (240), jeweils zur Abgabe eines Lenkdrucksignals und eines Fahrzeuggeschwindigkeitssignals an besagte Steuerung.

## Revendications

1. Mécanisme de direction assistée sous pression hydraulique comprenant :

   - une source de pression hydraulique (12), une partie de direction pouvant être déplacée sous pression (14) destinée à être connectée à des organes de direction assemblés pour un véhicule, un élément d'entraînement (16) connecté à ladite partie pouvant être déplacée sous pression, un arbre primaire (10) connecté audit élément d'entraînement ;

   - une chambre de soupape (18), des moyens de soupape de direction rotatifs (26) situés dans ladite chambre et définissant partiellement des conduits de distribution et d'écoulement retour de pression s'étendant entre ladite source de pression (12) et ladite partie pouvant être déplacée sous pression (14) pour établir une pression de direction et des forces différentielles de pression de direction sur ladite partie pouvant être déplacée sous pression ;

   - lesdits moyens de soupape (26) comprenant un élément de soupape interne (70) et un élément de soupape à manchon périphérique (28), ledit élément de soupape interne et ledit élément de soupape à manchon ayant des listels de soupape correspondants (66, 68, 96, 98, 100, 102), l'un desdits éléments de soupape étant connecté audit arbre primaire et l'autre étant connecté de manière à être entrainé audit élément d'entraînement, le déplacement rotatif relatif desdits éléments de soupape (28, 70) effectuant de ce fait un changement dans la zone d'écoulement à travers lesdits moyens de soupape et un changement de différentiel de pression correspondant agissant sur ladite partie pouvant être déplacée sous pression ;

- au moins deux pistons de pression de réaction (110, 112) dans ledit élément de soupape à manchon (28), une structure de conduit dans lesdits moyens de soupape (26) pour distribuer la pression de réaction pour ladite partie pouvant être déplacée sous pression vers lesdits pistons de réaction, établissant de ce fait des forces de réaction de couple de direction opposées ;

- des moyens (114, 116) destinés à appliquer lesdites forces de réaction à l'un desdits éléments de soupape (28, 70), le déplacement angulaire relatif desdits éléments de soupape étant de ce fait contré ;

- des moyens de détection (230, 240, 242) destinés à fournir un signai qui est fonctionnellement lié à au moins une variable de fonctionnement du véhicule ; et

- des moyens de soupape de contrôle de pression de réaction (144, 146, 148) communiquant avec lesdits moyens de soupape de direction (26) et lesdits moyèns de détection pour modifier ladite pression de direction afin d'établir une valeur pour ladite pression de réaction qui soit fonctionnellement liée à ladite variable de fonctionnement du véhicule, un couple de direction variable étant de ce fait obtenu en tant que fonction de pression de réaction indépendamment du degré de déplacement angulaire relatif desdits éléments de soupape et caractérisé par ledit élément de manchon (28) guidé de manière rotative dans ladite chambre (18) en une extrémité axiale dudit élément de soupape à manchon et à l'autre extrémité axiale de celui-ci ;

- ledit élément de soupape interne (70) comprenant une bague guidée de manière rotative à l'intérieur dudit élément de manchon (28) ; et

- une connexion d'entraînement articulée entre ladite bague (70) et ledit arbre primaire, ladite bague étant de ce fait disposée dans ledit élément de soupape à manchon (28) avec une corrélation intégrale et s'adapte auxdits pistels de soupape pour ledit élément de soupape à manchon indépendamment de tout désalignement entre ledit élément de soupape à manchon (28) et ledit élément d'entraînement (16).

2. Mécanisme selon la revendication 1, dans lequel lesdits moyens de soupape de contrôle de pression de réaction comprennent des moyens de soupape à solénoïde (148) communiquant avec ladite partie pouvant être déplacée sous pression et lesdits pistons de pression de réaction, lesdits moyens de soupape à solénoïde étant de ce fait soumis à ladite pression de direction ;

- un dispositif de réglage électronique (234) connecté auxdits moyens de soupape à solénoïde et auxdits moyens de détection (230, 240, 242), ladite soupape à solénoïde répondant de ce fait à un signal de commande établi par ledit dispositif de réglage qui est lié en magnitude à la magnitude de ladite variable de fonctionnement.

3. Mécanisme selon la revendication 2, dans lequel ledit dispositif de réglage (234) inclut une portion de mémoire (252) qui contient des données de couple de direction, de pression de direction et de vitesse du véhicule pour des caractéristiques de direction optimales à différentes vitesses, des moyens de détection de pression (230) destinés à détecter la pression de direction et à fournir audit dispositif de réglage un signal de pression de direction, et des moyens de détection de la vitesse du véhicule (240) destinés à fournir audit dispositif de réglage un signal de vitesse du véhicule.

4. Mécanisme selon la revendication 2, dans lequel ledit dispositif de réglage (234) inclut une portion de mémoire (252) qui contient des données de couple et de direction pour plusieurs vitesses du véhicule, des moyens de détection de pression (230) destinés à détecter la pression de direction et des moyens de détection de vitesse du véhicule (240) destinés à fournir audit dispositif de réglage un signal de pression de direction et un signal de vitesse du véhicule.

FIG. 1.

FIG.2.

Left Turn    Inlet    Right Turn    Outlet

FIG.3.

FIG. 4.

On Center

FIG. 5.

Right Turn

FIG. 6.

236 ⌐T̄

254

**Output Driver**

**Power Supply**

234

250

252

246 248

**Buffer** → **Memory** ⟷ **CPU** | **PC**

**Input Signal Cond.** 244 ⌐T̄ 243

232 238

*Press. (ΔP)*

*Lateral Accel.*

*Press (ΔP)*

20mph 30mph
40mph
50mph

*Torque (in-lbs)*

**FIG. 4A.**

0 10 20 40 60 70mph

*Strg. Press.*

P-T Curves shaped with
strg. press. and vehicle speed
sensors, software and solenoid
valve

Electric fail-safe mode

0 *Strg. Torque* T

**FIG. 11A.**

$P_R$
150 PSI

0 1.0 AMP

**FIG. 11B.**

FIG. 9B.

FIG. 7.

FIG. 8.

Modulator Valve

Limiter Valve

Proportional Solenoid Valve

FIG. 9.

FIG. 10.

17

$$P_2 = S/_{A_2 - A_1} + (P_1 - S/_{A_2 - A_1})A_1/_{A_2}$$
$$= S/_{A_2} + P_1 A_1/_{A_2}$$

FIG. 9A.

FIG. 11.